# EUROPÄISCHE PATENTSCHRIFT

(11) **EP 2 052 153 B1**
(45) Veröffentlichungstag und Bekanntmachung des Hinweises auf die Patenterteilung: **18.04.2012**
(21) Anmeldenummer: 07787244.8
(22) Anmeldetag: 09.07.2007
(51) Int. Cl.: F04B 1/20, F16C 32/06

(54) **AXIALKOLBENMASCHINE**
AXIAL PISTON MACHINE
MACHINE À PISTONS AXIAUX

(30) Priorität: 11.08.2006 DE 102006037690
(43) Veröffentlichungstag der Anmeldung: 29.04.2009
(73) Patentinhaber: Robert Bosch GmbH, 70442 Stuttgart (DE)
(72) Erfinder: CICHON, Martin, 70499 Stuttgart (DE)
(86) Internationale Anmeldenummer: PCT/EP2007/056968
(87) Internationale Veröffentlichungsnummer: WO 2008/017557

(56) Entgegenhaltungen:
- EP-A2- 0 608 144
- EP-A2- 1 298 335
- US-A- 3 554 095
- US-A1- 2005 172 798

## Beschreibung

### Stand der Technik

Die Erfindung betrifft eine Axialkolbenmaschine gemäß dem Oberbegriff des Anspruchs 1. Eine solche Axialkolbenmaschine ist aus der US 3,554,095 bekannt. Bei der bekannten Axialkolbenmaschine sind Zuleitungen für einen Lagerspalt vorgesehen, die über jeweils eine Ventileinrichtung im Querschnitt beeinflussbar sind.

Aufgabe der Erfindung ist es, eine alternative Steuerungs- und/oder Regelungseinrichtung zur Steuerung und/oder Regelung des Fluiddrucks im Lagerspalt, also zur Regelung und/oder Steuerung des Schmierfilmdrucks, vorzusehen. . Diese Aufgabe wird bei einer Axialkolbenmaschine mit den Merkmalen des Anspruchs 1 gelöst.

Vorteilhafte Weiterbildungen der erfindungsgemäßen Axialkolbenmaschine sind in den Unteransprüchen angegeben.

Zur Realisierung einer Regelungseinrichtung ist mindestens eine Elektronikeinheit vorgesehen, die mit mindestens einem Drucksensor und/oder einem Volumenstromsensor verbunden ist. Dieser Sensor misst den Druck bzw. den Volumenstrom innerhalb des Lagerspalts oder in einer Zuleitung zu dem Lagerspalt. Die Elektronikeinheit regelt den gemessenen Istdruck bzw. Istvolumenstrom auf einen vorgegebenen Solldruck bzw. Sollvolumenstrom.

Um den Bauraum der Axialkolbenmaschine optimal auszunutzen, ist gemäß einer Weiterbildung der Erfindung mit Vorteil vorgesehen, dass mindestens eine der Zuleitungen, vorzugsweise sämtliche Zuleitungen durch die Schwenkwiege hindurchgeführt sind. Dabei ist es von Vorteil, wenn die Zuleitungen an ein hydraulisches Verstellglied zur Verstellung der Schwenkwiege angeschlossen sind, über welches die Zuleitungen mit Förderfluid gespeist werden. Gegebenenfalls kann mindestens eine Zuleitung zusätzlich oder alternativ durch das Gehäuse geführt werden.

Zur dauerhaften Reduzierung des Fluiddrucks ist es von Vorteil, wenn mindestens eine Zuleitung zu dem Lagerspalt einen Drosselabschnitt bzw. eine Drossel aufweist, um den Volumenstrom und damit den Leckagestrom sowie die Stelldruckpulsation dauerhaft zu verringern.

### Kurze Beschreibung der Zeichnungen

Weitere Vorteile und zweckmäßige Ausführungen der Erfindung sind in den weiteren Ansprüchen, der Figurenbeschreibung und den Figuren erläutert.

Es zeigen:
- Fig. 1:: eine schematisch, geschnittene Darstellung einer Axialkolbenmaschine mit einer Schwenkwiege,
- Fig. 2:: eine um 90° gedrehte Ansicht von Fig. 1, jedoch mit nicht geneigter Schwenkwiege und
- Fig. 3:: eine mögliche Ausgestaltungsform eines Details aus den Fig. 1 und Fig. 2, das eine mögliche Steuerungs- und/oder Regelungseinrichtung zeigt.

### Ausführungsformen der Erfindung

In den Figuren sind gleiche Bauteile und Bauteile mit gleicher Funktion mit den gleichen Bezugszeichen gekennzeichnet.

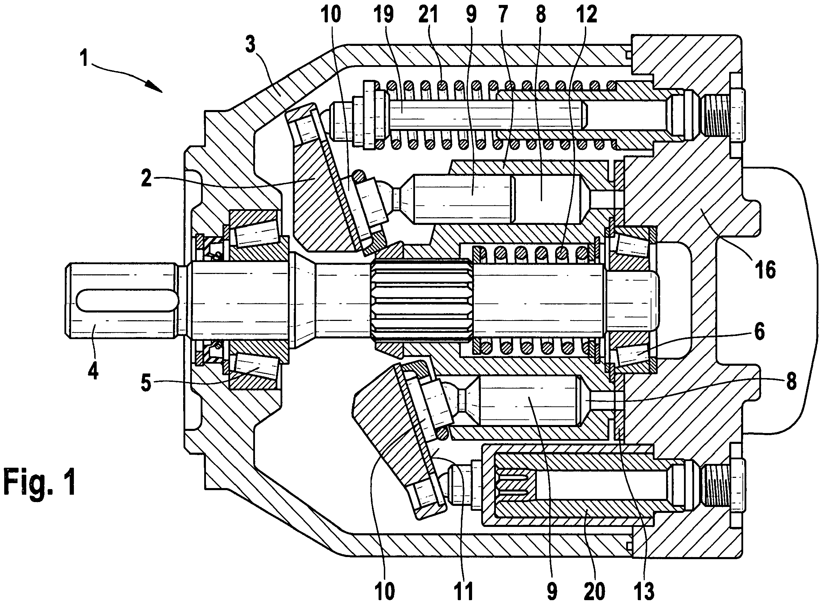

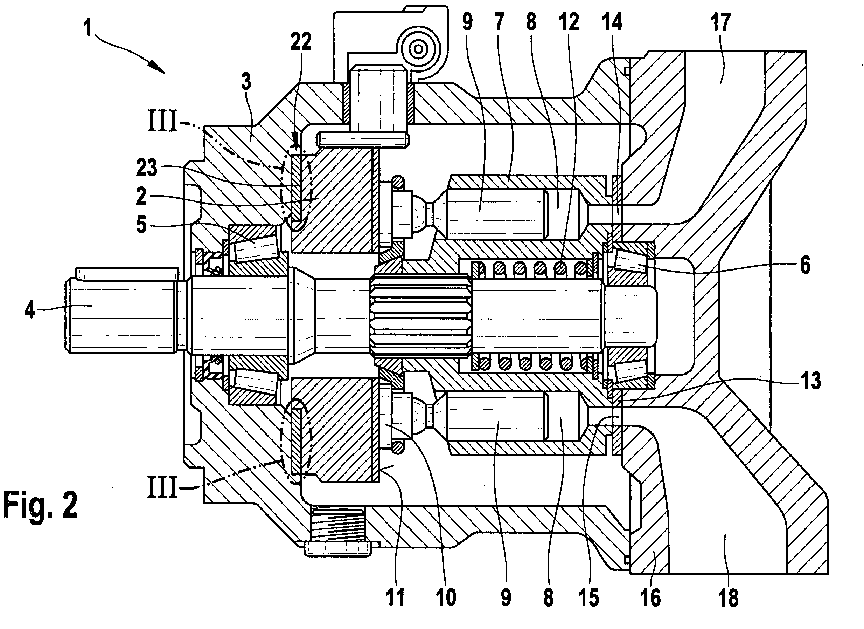

Die gezeigte Axialkolbenmaschine 1 ist mit einer Schwenkwiege 2 versehen, die schwenkbar innerhalb eines Gehäuses 3 angeordnet ist. Die Schwenkwiege 2 ist zwischen der in Fig. 1 gezeigten geneigten Position und der in Fig. 2 gezeigten geraden Position stufenlos verstellbar.

Innerhalb des Gehäuses 3 ist eine Welle 4 mit Hilfe zweier in axialer Richtung beabstandeter Wälzlager 5, 6 drehbar gelagert. Die Welle 4 ist mit einem Zylinderkörper 7 drehfest verbunden, wobei innerhalb von über den Umfang des Zylinderkörpers 7 verteilten Zylinderbohrungen 8 in axialer Richtung parallel zur Welle 4 bewegbare Kolben 9 angeordnet sind. Die Kolben 9 rotieren zusammen mit der Welle 4 und dem Zylinderkörper 7 in Umfangsrichtung und stützen sich dabei mit Gleitschuhen 10 auf einer Gleitoberfläche 11 der Schwenkwiege 2 ab.

Mit Hilfe einer Schraubendruckfeder 12 wird der Zylinderkörper 7 gegen eine Steuerplatte 13 angefedert, in der eine Saugniere 14 und eine Druckniere 15 eingebracht sind. Die Steuerplatte 13 liegt mit der in der Zeichnungsebene rechten Seite an einer Anschlußplatte 16 in der Weise an, dass sich die Saugniere 14 an einem Sauganschluss 17 und die Druckniere 15 an einem Druckanschluss 18 befinden. Durch die Rotation des Zylinderkörpers 7 und der nicht eingezeichneten Zylinderachse und durch die kinematische Führung der Kolben 9 in den Zylinderbohrungen 8 und an der Schwenkwiege 2 führen die Kolben 9 periodische Bewegungen in axialer Richtung parallel zur Welle 4 aus, wobei in der Bewegungsrichtung von der Steuerplatte 13 weg das Fluid von der Saugniere 14 angesaugt wird und das Fluid in der entgegengesetzten Bewegungsrichtung der Kolben 9 in die Druckniere 15 gefördert wird.

In der Darstellung gemäß Fig. 1 ist die Schwenkwiege 2 in einer Schrägposition dargestellt, wohingegen die Schwenkwiege 2 in Fig. 2 eine nicht geneigte, d.h. orthogonal zur Welle 4 angeordnete Position einnimmt. Wird die Welle 4 in letzterer Position der Schwenkscheibe 2 in Rotation versetzt, bewegen sich die Kolben 9 nicht axial, sondern nur in Umfangsrichtung und es erfolgt keine Fluidförderung, wohl aber werden die Kolben 9 beim Überstreichen der Saugniere 14 bzw. der Druckniere 15 abwechselnd mit Saugdruck bzw. Förderdruck beaufschlagt.

Zum Verschwenken der Schwenkwiege 2 sind zwei Kolbenzylindereinheiten 19, 20 vorgesehen, die mit Förderfluid versorgt werden. Dabei ist die Kolben-Zylindereinheit 19 mit geringerem Querschnitt nicht steuerbar, das bedeutet, diese ist immer mit maximalem Förderdruck beaufschlagt. Die Kolben-Zylindereinheit 19 umfasst eine Schraubendruckfeder 21, die sicherstellt, dass die Schwenkwiege 2 auch bei geringem oder gar keinem Überdruck im Druckanschluss 18 und/oder im Zylinder der Kolben-Zylindereinheit 19 ausgelenkt wird. Die Steuerung der Verstellbewegung erfolgt über die zweite Kolben-Zylindereinheit 20, welche einen größeren Durchmesser aufweist als die erste Zylinder-Kolbeneinheit 19. Gegebenenfalls erfolgt die Verstellung der Schwenkscheibe 2 mittels der Kolben-Zylindereinheit 20 entgegen der von der Kolben-Zylindereinheit 19 auf die Schwenkwiege 2 ausgeübten Druckkraft.

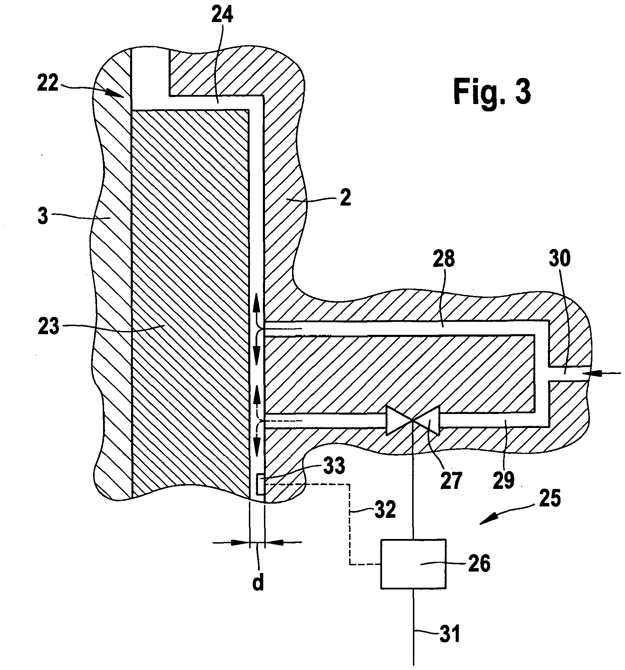

Um eine möglichst widerstandsarme Verstellbewegung der Schwenkwiege 2 innerhalb des Gehäuses 3, beispielsweise von der in Fig. 2 gezeigten Position in die in Fig. 1 gezeigte Position, zu ermöglichen, ist die Schwenkwiege 2 über ein als Gleitlager ausgebildetes Schwenklager 22 im Gehäuse 3 gelagert. Hierzu ist innerhalb des Gehäuses 3 eine Lagerschale 23 fest angeordnet. Zwischen der Lagerschale 23 und der Schwenkwiege 2 ist ein Lagerspalt 24 (s. Fig. 3) vorgesehen, durch den ständig Förderfluid gepumpt wird. Das Vorsehen einer Lagerschale 23 ist fakultativ. Der Lagerspalt kann beispielsweise auch unmittelbar zwischen Schwenkwiege und Gehäuse oder zwischen zwei gegenüberliegenden Lagerschalen vorgesehen sein, wobei im letzteren Fall eine der Lagerschalen drehfest mit der Schwenkwiege verbunden ist. Der aus dem Lagerspalt 24 herausströmende Leckagefluidstrom wird einem nicht dargestellten Förderfluidtank zugeführt. Durch das durch den Lagerspalt 24 hindurchströmende, unter Druck stehende Förderfluid wird das Schwenklager hydrostatisch unterstützt. Ein Aufsitzen der Schwenkwiege 2 auf der Lagerschale 23 und damit ein Pressen des Lagers wird mit Vorteil vermieden.

Gemäß der Erfindung ist eine Steuerungs- und/oder Regelungseinrichtung 25 vorgesehen. Diese umfasst im vorliegenden Ausführungsbeispiel eine Elektronikeinheit 26, d.h. eine Logikeinheit. Diese wirkt stellend auf ein in diesem Ausführungsbeispiel als Absperrventil ausgebildetes Ventil 27 ein, welches innerhalb einer von zwei parallelen Zuleitungen 28, 29 für Förderfluid zum Lagerspalt 24 angeordnet ist. Beide Zuleitungen 28, 29 werden über eine gemeinsame Versorgungsleitung 30 mit Förderfluid versorgt. Die Zuleitungen 28, 29 sowie die Versorgungsleitung 30 sind innerhalb der Schwenkwiege 2 angeordnet und werden vom Förderfluid aus der Kolben-Zylindereinheit 19 und/oder aus dem Druckanschluss 18 versorgt. Hierzu sind innerhalb der Kolben-Zylindereinheit 19 und/oder innerhalb des Gehäuses 3 entsprechende Zuleitungen bzw. Versorgungsbohrungen vorgesehen.

Der Querschnitt der Zuleitung 28 ist nicht variabel, so dass durch diese eine andauernde Versorgung des Lagerspaltes 24 mit unter Druck stehendem Fluid erfolgt. Während einer Verstellbewegung der Schwenkwiege 2 mittels der Kolben-Zylindereinheiten 19, 20, bzw. kurz vor einer derartigen Verstellbewegung, wird von der Elektronikeinheit, wenn diese einen entsprechenden Befehl über eine Signalleitung 31 erhält, das Ventil 27 geöffnet, wodurch sich der Fluiddruck innerhalb des Lagerspaltes 24 erhöht, wodurch sich wiederum die Schmierfilmdicke und damit die Dicke d des Lagerspaltes 24 erhöht. Ein Fressen und/oder Mischreibung und/oder Trockenreibung und damit einhergehender Verschleiß des Lagers 22 während der Verstellbewegung wird somit mit Vorteil vermieden.

Alternativ hierzu ist das Ventil 27 nicht als Absperrventil, sondern als Querschnittsveränderungsventil ausgebildet.

. Gegebenenfalls können auch zusätzlich zu den Zuleitungen 28, 29 weitere Zuleitungen vorgesehen werden, die teilweise im Querschnitt nicht veränderbar sind und die teilweise mit einem entsprechenden Absperr- oder Querschnittsveränderungsventil ausgestattet sind.

In Fig. 3 ist die Elektronik- bzw. Logikeinheit 26 über eine gestrichelt dargestellte, fakultative Signalleitung 32 mit einem fakultativen Drucksensor 33 verbunden, der die Elektronikeinheit 26 mit einer Istdruckgröße versorgt. In diesem Fall handelt es sich bei der Einrichtung gemäß Fig. 3 um eine Regelungseinrichtung. Im Falle einer ausschließlichen Steuereinrichtung kann auf den Sensor 33 und die Signalleitung 32 verzichtet werden.

## Patentansprüche

1. Axialkolbenmaschine mit einem Gehäuse (3) und mit in Zylinderbohrungen (8) eines rotierbaren Zylinderkörpers (7) angeordneten Kolben (9), die sich auf einer Schwenkwiege (2) abstützen, wobei die Schwenkwiege (2) über mindestens ein Schwenklager (22) mit mit Fluid beaufschlagtem Lagerspalt (24) gelagert ist, wobei eine Steuerungs- und/oder Regelungseinrichtung (25) zur Steuerung und/oder Regelung des Fluiddrucks im Lagerspalt (24) vorgesehen ist, wobei der Lagerspalt (24) über mindestens zwei Zuleitungen (28, 29) mit Fluid versorgbar ist, und wobei mindestens eine der Zuleitungen (29) mittels eines Ventils (27) absperrbar ist und/oder der Querschnitt mindestens einer der Zuleitungen (29) mittels eines Ventils (27) veränderbar ist,
**dadurch gekennzeichnet,**
**dass** der Querschnitt mindestens einer Zuleitung (28, 29) unveränderbar ist.

2. Axialkolbenmaschine nach Anspruch 1, **dadurch gekennzeichnet, dass** das Fluid das Förderfluid ist.

3. Axialkolbenmaschine nach einem der Ansprüche 1 der 2, **dadurch gekennzeichnet, dass** die Steuerungs- und/oder Regelungseinrichtung (25) den Fluiddruck, vorzugsweise ausschließlich, zur Verstellung der Schwenkwiege (2) erhöhend ausgebildet ist.

4. Axialkolbenmaschine nach Anspruch 3, **dadurch gekennzeichnet, dass** die Steuerungs- und/oder Regelungseinrichtung den Fluiddruck bereits vor dem Beginn der Verstellbewegung, vorzugsweise weniger als 5 s, insbesondere weniger als 2 s, bevorzugt weniger als 1 s, vor dem Beginn der Verstellbewegung, erhöhend ausgebildet ist.

5. Axialkolbenmaschine nach einem der vorhergehenden Ansprüche, **dadurch gekennzeichnet, dass** mindestens ein mit einer Elektronikeinheit (26) der Regelungseinrichtung (25) signalleitend verbundener Drucksensor (33) zur Messung des Fluiddrucks vorgesehen ist, und dass die Elektronikeinheit (26) den Fluiddruck in Abhängig-, keit des gemessenen Istdrucks, insbesondere durch eine Ventilansteuerung, regelnd ausgebildet ist.

6. Axialkolbenmaschine nach einem der vorhergehenden Ansprüche, **dadurch gekennzeichnet, daß** der Querschnitt einer Zuleitung (28, 29) über mindestens ein Ventil (27) veränderbar ist.

7. Axialkolbenmaschine nach Anspruch 1 **dadurch gekennzeichnet, dass** mindestens eine der Zuleitungen (28, 29), vorzugsweise sämtliche Zuleitungen (28, 29) durch die Schwenkwiege (2) hindurch geführt sind.

8. Axialkolbenmaschine nach Anspruch 1 oder 7, **dadurch gekennzeichnet, dass** in mindestens einer der zuleitungen (28, 29) eine Drossel integriert ist.

## Claims

1. Axial piston machine having a housing (3) and having pistons (9) arranged in cylinder bores (8) of a rotatable cylinder body (7), which pistons are supported on a pivot cradle (2), wherein the pivot cradle (2) is mounted by means of at least one pivot bearing (22) with a bearing gap (24) which is charged with fluid, wherein a control and/or regulating device (25) is provided for controlling and/or regulating the fluid pressure in the bearing gap (24), wherein fluid can be supplied to the bearing gap (24) via at least two feed lines (28, 29), and wherein at least one of the feed lines (29) can be shut off by means of a valve (27) and/or the cross section of at least one of the feed lines (29) can be varied by means of a valve (27),
**characterized**
**in that** the cross section of at least one feed line (28, 29) is non-variable.

2. Axial piston machine according to Claim 1, **characterized in that** the fluid is the delivery fluid.

3. Axial piston machine according to either of Claims 1 and 2, **characterized in that** the control and/or regulating device (25) is designed to increase the fluid pressure, preferably exclusively, for the adjustment of the pivot cradle (2).

4. Axial piston machine according to Claim 3, **characterized in that** the control and/or regulating device is designed to increase the fluid pressure already before the start of the adjusting movement, preferably less than 5 s, in particular less than 2 s, preferably less than 1 s before the start of the adjusting movement.

5. Axial piston machine according to one of the preceding claims, **characterized in that** at least one pressure sensor (33) is provided which serves for measuring the fluid pressure and which is connected in signal-transmitting fashion to an electronic unit (26) of the regulating device (25), and **in that** the electronic unit (26) is designed to regulate the fluid pressure as a function of the measured actual pressure, in particular through the actuation of a valve.

6. Axial piston machine according to one of the preceding claims, **characterized in that** the cross section of one feed line (28, 29) can be varied by means of at least one valve (27).

7. Axial piston machine according to Claim 1, **characterized in that** at least one of the feed lines (28, 29), preferably all of the feed lines (28, 29), are led through the pivot cradle (2).

8. Axial piston machine according to Claim 1 or 7, **characterized in that** a restrictor is integrated in at least one of the feed lines (28, 29).

## Revendications

1. Machine à pistons axiaux comprenant un boîtier (3) et des pistons (9) disposés dans des alésages de cylindres (8) d'un corps de cylindre (7) rotatif, les pistons s'appuyant sur un berceau pivotant (2), le berceau pivotant (2) étant supporté par le biais d'au moins un palier pivotant (22) avec un interstice de palier (24) sollicité par un fluide, un dispositif de commande et/ou de régulation (25) pour la commande et/ou la régulation de la pression de fluide dans l'interstice de palier (24) étant prévu, l'interstice de palier (24) pouvant être alimenté en fluide par le biais d'au moins deux conduites d'amenée (28, 29), et au moins l'une des conduites d'amenée (29) pouvant être bloquée au moyen d'une soupape (27) et/ou la section transversale d'au moins l'une des conduites d'amenée (29) pouvant être modifiée par le biais d'une soupape (27),
**caractérisée en ce que**
la section transversale d'au moins une conduite d'amenée (28, 29) ne peut pas être modifiée.

2. Machine à pistons axiaux selon la revendication 1, **caractérisée en ce que** le fluide est le fluide refoulé.

3. Machine à pistons axiaux selon l'une quelconque des revendications 1 ou 2, **caractérisée en ce que** le dispositif de commande et/ou de régulation (25) est réalisé de manière à augmenter la pression de fluide, de préférence exclusivement pour régler le berceau pivotant (2).

4. Machine à pistons axiaux selon la revendication 3, **caractérisée en ce que** le dispositif de commande et/ou de régulation est réalisé pour augmenter la pression de fluide déjà avant le début du mouvement de réglage, de préférence moins de 5 s, notamment moins de 2 s, et de préférence moins de 1 s avant le début du mouvement de réglage.

5. Machine à pistons axiaux selon l'une quelconque des revendications précédentes, **caractérisée en ce qu'**au moins un capteur de pression (33) connecté par conduction de signaux à une unité électronique (26) du dispositif de régulation (25) est prévu pour mesurer la pression de fluide, et **en ce que** l'unité électronique (26) est réalisée de manière à réguler la pression de fluide en fonction de la pression réelle mesurée, notamment par une commande de soupape.

6. Machine à pistons axiaux selon l'une quelconque des revendications précédentes, **caractérisée en ce que** la section transversale d'une conduite d'amenée (28, 29) peut être modifiée par le biais d'au moins une soupape (27).

7. Machine à pistons axiaux selon la revendication 1, **caractérisée en ce qu'**au moins l'une des conduites d'amenée (28, 29), de préférence toutes les conduites d'amenée (28, 29) sont guidées à travers le berceau pivotant (2).

8. Machine à pistons axiaux selon la revendication 1 ou 7, **caractérisée en ce que** dans au moins l'une des conduites d'amenée (28, 29) est intégré un étranglement.
